**Europäisches Patentamt**

**European Patent Office**

**Office européen des brevets**

(19)

(11) Veröffentlichungsnummer : **0 466 750 B1**

# (12) EUROPÄISCHE PATENTSCHRIFT

(45) Veröffentlichungstag der Patentschrift :
**08.12.93 Patentblatt 93/49**

(51) Int. Cl.⁵ : **F16H 61/16**

(21) Anmeldenummer : **90905493.4**

(22) Anmeldetag : **05.04.90**

(86) Internationale Anmeldenummer :
**PCT/EP90/00531**

(87) Internationale Veröffentlichungsnummer :
**WO 90/12228 18.10.90 Gazette 90/24**

(54) **MOTORDREHZAHLABHÄNGIGE SPERRE ZUM VERHINDERN UNZULÄSSIGER RÜCKSCHALTUNGEN IN KRAFTFAHRZEUG-WECHSELGETRIEBEN.**

(30) Priorität : **08.04.89 DE 3911519**

(43) Veröffentlichungstag der Anmeldung :
**22.01.92 Patentblatt 92/04**

(45) Bekanntmachung des Hinweises auf die
Patenterteilung :
**08.12.93 Patentblatt 93/49**

(84) Benannte Vertragsstaaten :
**DE ES FR GB IT**

(56) Entgegenhaltungen :
**EP-A- 83 855**
**DE-A- 1 946 496**
**DE-A- 2 040 195**
**DE-A- 2 604 593**
**US-A- 3 937 107**

(73) Patentinhaber : **ZF FRIEDRICHSHAFEN Aktiengesellschaft**
**D-88038 Friedrichshafen (DE)**

(72) Erfinder : **EYMÜLLER, Helmut**
**Nussbaumweg 5**
**D-7990 Friedrichshafen (DE)**
Erfinder : **STÜTZLE, Siegfried**
**Sonnenbergstrasse 34**
**D-7990 Friedrichshafen (DE)**
Erfinder : **LEGNER, Jürgen**
**Harrössenstrasse 15**
**D-7990 Friedrichshafen (DE)**
Erfinder : **BUCK, Gerhard**
**Sambethstrasse 5/3**
**D-7990 Friedrichshafen (DE)**

EP 0 466 750 B1

## Beschreibung

Die Erfindung betrifft eine motordrehzahlabhängige Sperre zum Verhindern unzulässiger Rückschaltungen (im folgenden kurz "Rückschalt-Sperre" genannt) in Kraftfahrzeug-Wechselgetrieben mit wenigstens zwei schaltbaren Gängen mit einem vom Fahrer verstellbaren Gangschaltventil, mit einem zwei Schaltstellungen aufweisenden Schaltventil und mit einem zwei Schaltstellungen aufweisenden Steuerventil, nach dem Oberbegriff des Anspruches 1.

Eine derartige Rückschalt-Sperre ist beispielsweise bekannt aus der DE-C-20 40 195. Dabei besteht die Sperreinrichtung aus zwei unabhängigen Einzelsperren, die fahrgeschwindigkeitsabhängig arbeiten. Eine dieser Einzelsperren wirkt auf ein Gruppengetriebe, das einem Vier-Gang-Getriebe nachgeschaltet ist. Die beiden Gangstufen des Gruppengetriebes werden durch ein als Relaisventil bezeichnetes Schaltventil geschaltet, das durch ein als Vorsteuerventil bezeichnetes Gangschaltventil vorgesteuert wird. Die eigentliche Schaltung wird durch einen doppelt wirkenden Schaltzylinder vorgenommen, der je einer Betätigungseinrichtung für die langsame und die schnelle Gangstufe entspricht. Durch eine fahrgeschwindigkeitsabhängig arbeitende Niederdruckpumpe wird eine Rückschaltung von der schnellen Ganggruppe in die langsame Ganggruppe dann verhindert, wenn das Fahrzeug eine bestimmte Fahrgeschwindigkeit überschritten hat, die einer vorbestimmten noch zulässigen Drehzahl des Antriebsmotors entspricht. Durch diese Rückschalt-Sperre soll ein Überdrehen des Antriebsmotors verhindert werden, das auftreten würde, wenn das Wechselgetriebe bei hochdrehendem Antriebsmotor aus dem schnellen Gangbereich in den langsamen Gangbereich zurückgeschaltet werden würde.

Die bekannte Rückschalt-Sperre wird in der Praxis erfolgreich angewendet. Bei der Anwendung in bestimmten Fahrzeugen, beispielsweise in Mobilbaggern und ähnlichen Arbeitsmaschinen, wird jedoch großer Wert gelegt auf eine einfache Verlegung der Druckmittelleitungen (z. B. wegen der Durchführung der Leitungen vom Ober- in den Unterwagen des Mobilbaggers), die für die Steuerung und Betätigung des Getriebes und der Rückschalt-Sperre erforderlich sind.

Der Erfindung liegt deshalb die Aufgabe zugrunde, die bekannte Rückschalt-Sperre dahingehend zu vereinfachen, daß die Anzahl der benötigten Druckmittelleitungen verringert werden kann. Dabei soll jedoch die Qualität und Sicherheit der Sperre erhalten bleiben.

Diese Aufgabe wird durch die im Anspruch 1 gekennzeichnete motordrehzahlabhängige Sperre gelöst. Zweckmäßige und vorteilhafte Ausgestaltungen sind in den Unteransprüchen angegeben.

Die Lösung der Aufgabe besteht aus einer Kombination von Einzelmerkmalen. Dazu gehört vor allem, daß das Steuerventil ausschließlich mit dem von der Niederdruckpumpe geförderten Druckmittel in Berührung steht. Dies bedeutet, daß das Steuerventil als leichtgängiges Kolbenventil ohne Hochdruckabdichtung ausgeführt sein kann. Der von dem Steuerventil gesteuerte Niederdruckstrom wird dem Schaltventil zur direkten Betätigung an der großen Stirnfläche bzw. an der Ringfläche des als Stufenkolben ausgebildeten Schaltventilkolbens zugeführt. Für die Schaltung des langsamen Ganges wird die auf die Ringfläche wirkende Kraft des Niederdruckes unterstützt bzw. wird die auf die große Stirnfläche wirkende Kraft des Niederdruckes übersteuert durch die auf die kleine Stirnfläche des Stufenkolbens wirkende Kraft des Schaltdruckes. In einem Betriebszustand, bei dem der schnelle Gang eingeschaltet ist und der Antriebsmotor und damit die Niederdruckpumpe mit hoher Drehzahl dreht, bei der der vorbestimmte Wert des Druckes der Niederdruckpumpe überschritten wird, wird eine Beaufschlagung der Betätigungseinrichtung des langsamen Ganges mit Schaltdruck dadurch verhindert, daß der dem langsamen Gang zugeordnete erste Arbeitsleitungsanschluß mit dem Betätigungsanschluß für die Betätigungseinrichtung des schnellen Ganges verbunden wird. Dadurch wird eine unzulässige Rückschaltung in den langsamen Gang verhindert.

Durch diese erfindungsgemäße Ausbildung, zu der auch der direkte Anschluß zweier zu dem Gangschaltventil führender Arbeitsleitungen gehört, kann die Anzahl der Steuer- und Betätigungsleitungen an der Rückschalt-Sperre gegenüber der bekannten Einrichtung reduziert werden.

Durch die Anordnung von zwei Wechselventilen in dem Schaltventil können die für eine Verhinderung einer unzulässigen Rückschaltung erforderlichen Schaltwege leicht hergestellt bzw. abgesperrt werden.

Zur Verringerung von Leckage wird zwischen dem Teil des Schaltventils, der mit Niederdruck beaufschlagbar ist, und dem Teil, der mit Schaltdruck beaufschlagbar ist, eine Hochdruckdichtung angeordnet.

Um einen Druckanstieg in dem Betätigungsanschluß für die Betätigungseinrichtung des langsamen Ganges zu verhindern, der durch Leckage an dem Schaltventil auftreten könnte, wird ein drittes Wechselventil in dem Schaltventil angeordnet, das in seiner Neutralstellung eine Verbindung zwischen dem zweiten Arbeitsleitungsanschluß und dem Betätigungsanschluß für die Betätigungseinrichtung des langsamen Ganges offen hält, diese Verbindung aber immer dann absperrt, wenn in einem dieser Anschlüsse der Schaltdruck ansteht.

Im folgenden wird die Erfindung anhand eines in der Zeichnung dargestellten Ausführungsbeispieles näher erläutert. Es zeigt:

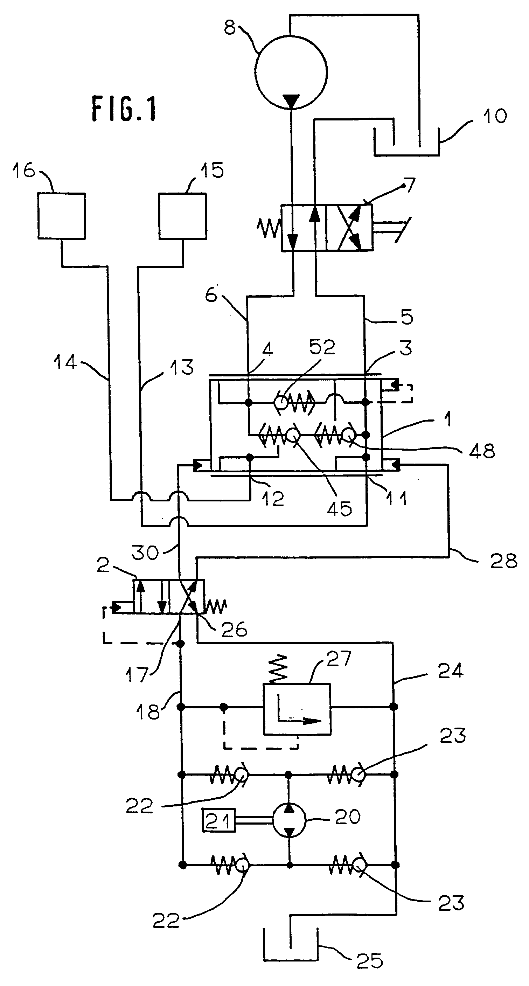

Fig. 1    einen Schaltplan der erfindungsgemäßen Sperre in schematischer Darstellung;

Fig. 2    einen Längsschnitt durch die Sperre mit Schaltventil und Steuerventil in deren Neutralstellung sowie mit den angeschlossenen Aggregaten in schematischer Darstellung;

Fig. 3    den Längsschnitt der Fig. 2, wobei die Ventile aus ihrer Neutralstellung verstellt sind.

Die Rückschalt-Sperre enthält ein Schaltventil 1 und ein Steuerventil 2, die beide zwei mögliche Schaltstellungen aufweisen. Das Schaltventil 1 weist zwei Anschlüsse 3 und 4 für zwei Arbeitsleitungen 5 bzw. 6 auf, die zu einem Gangschaltventil 7 führen und über das Gangschaltventil 7 wechselweise mit einer Servopumpe 8 bzw. mit einem Behälter 10 verbunden werden können. Das Gangschaltventil 7 ist vom Fahrer verstellbar.

Das Schaltventil 1 weist außerdem zwei Betätigungsanschlüsse 11 und 12 auf, die über zwei Betätigungsleitungen 13 bzw. 14 mit zwei Betätigungseinrichtungen 15 bzw. 16 verbunden sind. Die Betätigungseinrichtung 15 wird gebildet durch eine Kupplung für die Schaltung des langsamen Ganges eines nicht dargestellten Kraftfahrzeug-Wechselgetriebes mit zwei schaltbaren Gängen. Die Betätigungseinrichtung 16 ist gebildet durch eine Bremse für die Schaltung des schnellen Ganges des Kraftfahrzeug-Wechselgetriebes. Die Betätigungseinrichtungen 15, 16 sind zweckmäßigerweise als Federspeicherkupplungen ausgebildet. Für die Schaltung des langsamen Ganges wird die Betätigungseinrichtung 15 mit Schaltdruck beaufschlagt, während die Betätigungseinrichtung 16 entlüftet wird. Für die Schaltung des schnellen Ganges gilt das entsprechende.

Das Steuerventil 2 weist einen Pumpenanschluß 17 auf, der über eine Steuerleitung 18 mit einer Niederdruckpumpe 20 verbunden ist. Die Niederdruckpumpe 20 steht mit einem Antriebsmotor 21 in trieblicher Verbindung, so daß ihre Drehzahl gleich oder proportional zu der Drehzahl des Antriebsmotors ist. Die Niederdruckpumpe 20 ist zweckmäßigerweise eine Pumpe, die in beiden Drehrichtungen in an sich bekannter Weise über Rückschlagventile 22 in dieselbe Steuerleitung 18 fördert und über Rückschlagventile 23 und eine gemeinsame Rücklaufleitung 24 aus einem Behälter 25 Druckmittel ansaugt. Die Rücklaufleitung 24 ist in einem Rücklaufanschluß 26 an das Steuerventil 2 angeschlossen.

Die Niederdruckpumpe 20 ist zweckmäßigerweise über ein Druckbegrenzungsventil 27 abgesichert. Druckmittel, das von der Niederdruckpumpe 20 gefördert wird und nicht für die Steuerung des Schaltventils 1 benötigt wird, wird zweckmäßigerweise über eine nicht dargestellte Blende dem Schmierkreislauf des Kraftfahrzeug-Wechselgetriebes zugeführt.

Das Steuerventil 2 ist über zwei Steuerkanäle 28 und 30 mit dem Schaltventil 1 verbunden.

In dem Steuerventil 2 sind zwischen einem Steuerventilkolben 31 und einem Ventilgehäuse 32 zwei Steuerkantenpaare 33 und 34 gebildet, über die die Steuerkanäle 28 und 30 wechselweise mit dem Pumpenanschluß 17 bzw. mit dem Rücklaufanschluß 26 verbunden werden können. Das Steuerventil wird in seine eine Schaltstellung, in der der Steuerkanal 28 mit dem Pumpenanschluß 17 verbunden ist, durch die Kraft einer Druckfeder 35 gedrückt. Die andere Schaltstellung des Steuerventils 2 ist durch den auf eine Kolbenfläche 36 des Steuerventilkolbens 31 wirkenden Druck der Niederdruckpumpe 20, der einen vorbestimmten, durch die Druckfeder 35 wählbaren Wert übersteigt, einstellbar.

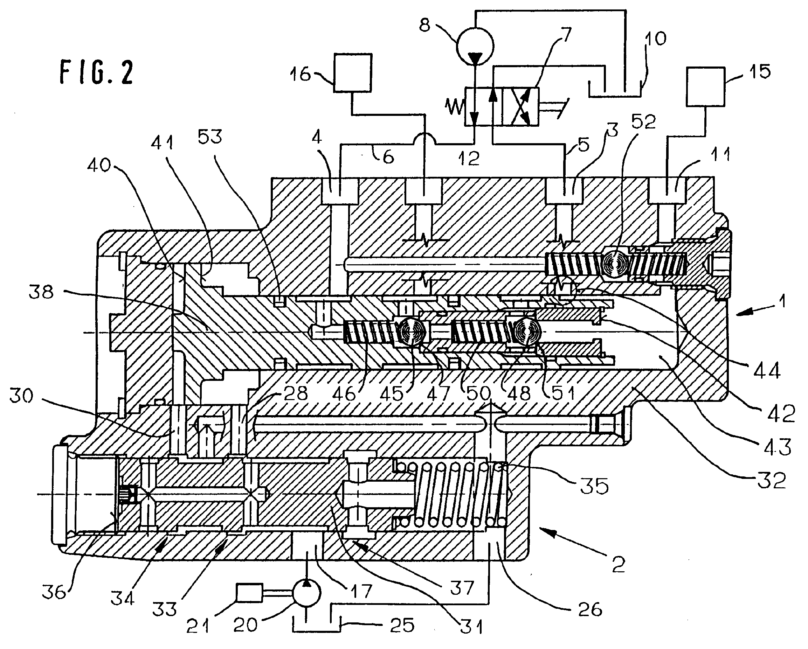

Das Druckbegrenzungsventil 27 ist gemäß dem Ausführungsbeispiel der Fig. 2 in dem Steuerventil durch ein drittes Steuerkantenpaar 37 in Verbindung mit der Druckfeder 35 und der Kolbenfläche 36 gebildet.

Das Schaltventil 1 enthält einen Schaltventilkolben 38, der als Stufenkolben ausgebildet ist. Die große Stirnfläche 40 des Stufenkolbens steht mit dem Steuerkanal 30 in Verbindung, die Ringfläche 41 mit dem Steuerkanal 28. Die große Stirnfläche 40 und die Ringfläche 41 bilden damit zwei Kolbenflächen, die mit dem von der Niederdruckpumpe 20 geförderten Druckmittel beaufschlagbar sind, das von dem Steuerventil 2 gesteuert wird.

Die kleine Stirnfläche 42 des Stufenkolbens begrenzt einen Zylinderraum 43, der in ständiger Verbindung mit dem Betätigungsanschluß 11 für die Betätigungseinrichtung 15 des langsamen Ganges steht. In der in Fig. 2 dargestellten linken Schaltstellung des Schaltventilkolbens 38 besteht eine Verbindung von dem ersten Arbeitsleitungsanschluß 3 zu dem Zylinderraum 43. Damit ist die kleine Stirnfläche 42 mit unter Schaltdruck stehendem Druckmittel beaufschlagbar, das von der Servopumpe 8 gefördert wird. In dem Schaltventil 1 ist ein Steuerkantenpaar 44 angeordnet, durch das die Verbindung von dem ersten Arbeitsleitungsanschluß 3 zu dem Zylinderraum 43 und damit zu dem Betätigungsanschluß 11 für die Betätigungseinrichtung 15 des langsamen Ganges durch eine Verschiebung des Schaltventilkolbens 38 nach rechts abgesperrt werden kann.

In dem Schaltventil 1, vorzugsweise in dessen Schaltventilkolben 38, ist ein erstes Wechselventil 45 angeordnet, das durch eine Druckfeder 46 gegen seinen in Fig. 2 rechten Sitz 47 gedrückt wird. In dieser Neutralstellung des ersten Wechselventils 45 besteht eine Verbindung zwischen dem zweiten Arbeitsleitungsanschluß 4 und dem Betätigungsanschluß 12 für die Betätigungseinrichtung 16 des schnellen Ganges.

In dem Schaltventilkolben 38 ist ein zweites Wechselventil 48 angeordnet, das durch eine Druckfeder 50 gegen seinen in Fig. 2 rechten Ventilsitz 51 gedrückt wird. Die genauere Lage und die Möglichkeiten der Verbindungen über die beiden Wechselventile 45 und 48 werden bei der Beschreibung der Funktion der erfindungsgemäßen Rückschalt-Sperre näher angegeben.

Ein drittes Wechselventil 52 ist in dem Ventilgehäuse 32 angeordnet und stellt eine Verbindung zwischen dem zweiten Arbeitsleitungsanschluß 4 und dem Betätigungsanschluß 11 für die Betätigungseinrichtung 15 des langsamen Ganges immer dann her, wenn in den beiden genannten Anschlüssen der gleiche Druck herrscht. Steht dagegen in einem dieser Anschlüsse der von der Servopumpe 8 erzeugte Schaltdruck an, dann wird die genannte Verbindung abgesperrt. Durch das Wechselventil 52 wird verhindert, daß sich bei nach rechts verschobenem Schaltventilkolben 38 in dem Zylinderraum 43 und damit in dem Betätigungsanschluß 11 durch Leckage ein Druck aufbaut.

In dem Schaltventilkolben 38 ist eine Hochdruckdichtung 53 angeordnet, die den mit Niederdruck beaufschlagbaren Teil des Schaltventils 1, der die große Stirnfläche 40 und die Ringfläche 41 enthält, von dem mit Schaltdruck beaufschlagbaren Teil des Schaltventils 1 trennt.

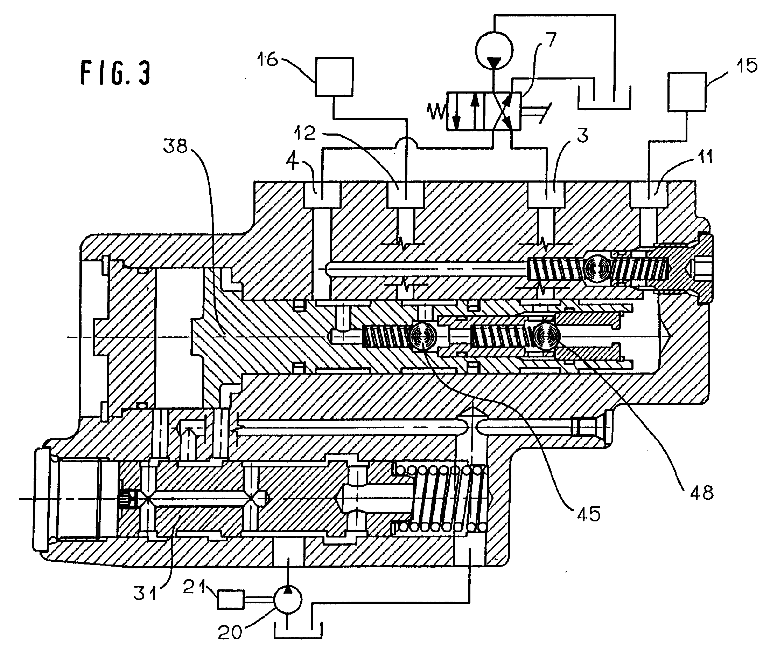

Im folgenden wird die Funktion der Rückschalt-Sperre anhand der Fig. 2 und 3 näher erläutert. In Fig. 2 ist die Sperre in ihrer Neutralstellung dargestellt. Ebenso ist das Gangschaltventil 7 in seiner Neutralstellung, die der Stellung für den schnellen Gang entspricht, dargestellt. Die Wechselventile 45, 48 und 52 sind in ihren Neutralstellungen gezeigt, die dann eingestellt sind, wenn kein Druck ansteht.

Wenn der erste Gang eingeschaltet werden soll, wird das Gangschaltventil 7 gegen die Kraft seiner Druckfeder verstellt, so daß eine Verbindung entsteht von der Servopumpe 8 zu dem ersten Arbeitsleitungsanschluß 3 und ein Rücklaufanschluß von dem zweiten Arbeitsleitungsanschluß 4 zu dem Behälter 10. Liegt der von der Niederdruckpumpe 20 erzeugte Druck unterhalb des vorbestimmten Wertes, das heißt liegt die Drehzahl der Niederdruckpumpe 20 und damit des Antriebsmotors 21 unter dem vorgegebenen Grenzwert von beispielsweise 800 U/min, so bleibt der Steuerventilkolben 31 in seiner linken Schaltstellung. Der Druck, der von der Niederdruckpumpe 20 über den Pumpenanschluß 17, das offene Steuerkantenpaar 33 und den Steuerkanal 28 der Ringfläche 41 des Schaltventilkolbens 38 zugeführt wird, hält den Schaltventilkolben 38 in seiner linken Schaltstellung. Der erste Arbeitsleitungsanschluß 3 steht über das offene Steuerkantenpaar 44 in Verbindung mit dem Betätigungsanschluß 11 für die Betätigungseinrichtung 15 des langsamen Ganges. Der Betätigungsanschluß 12 für die Betätigungseinrichtung 16 des schnellen Ganges steht über das erste Wechselventil 45 in Verbindung mit dem zweiten Arbeitsleitungsanschluß 4. Damit ist der langsame Gang eingeschaltet.

Wird die Drehzahl der Niederdruckpumpe 20 über den vorbestimmten Grenzwert hinaus erhöht, so wird der Steuerventilkolben 31 durch den entsprechenden auf seine Kolbenfläche 36 wirkenden Druck gegen die Kraft der Druckfeder 35 nach rechts verschoben, bis das Steuerkantenpaar 34 eine Verbindung herstellt zwischen der Niederdruckpumpe 20 und dem Steuerkanal 30, so daß die große Stirnfläche 40 mit Druck von der Niederdruckpumpe 20 beaufschlagt wird. Da jedoch in dem Zylinderraum 43 und damit auf die kleine Stirnfläche 42 des Schaltventilkolbens 38 der Schaltdruck wirkt, der etwa 8-bis 10mal größer ist als der von der Niederdruckpumpe 20 erzeugte Druck, bleibt der Schaltventilkolben 38 in seiner linken Schaltstellung.

Erst wenn durch das Gangschaltventil 7 der schnelle Gang eingeschaltet wird und der erste Arbeitsleitungsanschluß 3 mit dem Rücklauf zum Behälter 10 verbunden wird, verschiebt der auf die große Stirnfläche 40 wirkende Druck der Niederdruckpumpe 20 den Schaltventilkolben 38 nach rechts. Der in dem zweiten Arbeitsleitungsanschluß 4 anstehende Schaltdruck wird über das in seiner rechten Stellung befindliche Wechselventil 45 und den Betätigungsanschluß 12 der Betätigungseinrichtung 16 für den schnellen Gang zugeleitet. Der noch in der Betätigungseinrichtung 15 für den langsamen Gang herrschende Restdruck wird über das zweite Wechselventil 48 zum ersten Arbeitsleitungsanschluß 3 entlüftet. Dies ist möglich, weil die Druckfeder 50 nur eine sehr geringe Kraft auf den Schließkörper des Wechselventils 48 ausübt.

Wird in diesem Betriebszustand, das heißt wenn der schnelle Gang eingeschaltet ist und die Drehzahl der Niederdruckpumpe 20 und des Antriebsmotors 21 über dem vorbestimmten Grenzwert liegt, das Gangschaltventil 7 in die in Fig. 3 gezeigte Stellung verstellt, so wird der erste Arbeitsleitungsanschluß 3 mit Schaltdruck beaufschlagt, der im Normalfall der Betätigungseinrichtung 15 für den langsamen Gang zugeführt werden sollte. Eine solche Schaltung würde jedoch zu einem Überdrehen des Antriebsmotors 21 führen. Der dem ersten Arbeitsleitungsanschluß 3 zugeleitete Schaltdruck wird deshalb über das in seiner rechten Stellung befindliche zweite Wechselventil 48 und das in seine linke Stellung gedrückte erste Wechselventil 45 dem Betätigungsanschluß 12 für die Betätigungseinrichtung 16 des schnellen Ganges zugeleitet. Damit bleibt der schnelle Gang eingeschaltet.

Erst wenn der Antriebsmotor 21 in seiner Drehzahl unter den vorbestimmten Grenzwert abgebremst wurde, kann eine Verbindung von dem ersten Arbeitsleitungsanschluß 3 zu der Betätigungseinrichtung 15 für den langsamen Gang hergestellt werden, indem sowohl der Steuerventilkolben 31 als auch der Schaltventilkolben 38 in ihre linken Schaltstellungen bewegt werden.

EP 0 466 750 B1

Bezugszeichen

| | | | |
|---|---|---|---|
| 1 | Schaltventil | 34 | Steuerkantenpaar |
| 2 | Steuerventil | 35 | Druckfeder |
| 3 | erster Arbeitsleitungsanschluß | 36 | Kolbenfläche |
| | | 37 | Steuerkantenpaar |
| 4 | zweiter Arbeitsleitungsanschluß | 38 | Schaltventilkolben |
| | | 39 | – |
| 5 | Arbeitsleitung | 40 | große Stirnfläche |
| 6 | Arbeitsleitung | 41 | Ringfläche |
| 7 | Gangschaltventil | 42 | kleine Stirnfläche |
| 8 | Servopumpe | 43 | Zylinderraum |
| 9 | – | 44 | Steuerkantenpaar |
| 10 | Behälter | 45 | erstes Wechselventil |
| 11 | Betätigungsanschluß | 46 | Druckfeder |
| 12 | Betätigungsanschluß | 47 | Ventilsitz |
| 13 | Betätigungsleitung | 48 | zweites Wechselventil |
| 14 | Betätigungsleitung | 49 | – |
| 15 | Betätigungseinrichtung | 50 | Druckfeder |
| 16 | Betätigungseinrichtung | 51 | Ventilsitz |
| 17 | Pumpenanschluß | 52 | drittes Wechselventil |
| 18 | Steuerleitung | 53 | Hochdruckdichtung |
| 19 | – | | |
| 20 | Niederdruckpumpe | | |
| 21 | Antriebsmotor | | |
| 22 | Rückschlagventil | | |
| 23 | Rückschlagventil | | |
| 24 | Rücklaufleitung | | |
| 25 | Behälter | | |
| 26 | Rücklaufanschluß | | |
| 27 | Druckbegrenzungsventil | | |
| 28 | Steuerkanal | | |
| 29 | – | | |
| 30 | Steuerkanal | | |
| 31 | Steuerventilkolben | | |
| 32 | Ventilgehäuse | | |
| 33 | Steuerkantenpaar | | |

**Patentansprüche**

1. Motordrehzahlabhängige Sperre zum Verhindern unzulässiger Rückschaltungen in KraftfahrzeugWechselgetrieben mit wenigstens zwei schaltbaren Gängen und einem vom Fahrer verstellbaren Gangschaltventil (7),
   - mit einem zwei Schaltstellungen aufweisenden Schaltventil (1), über das durch je einen Betätigungsanschluß (11, 12) je einer Betätigungseinrichtung (15, 16) für einen langsamen und einen schnellen Gang unter Schaltdruck stehendes Druckmittel zuführbar ist, und dessen beide Schaltstellungen durch den Druck eines Druckmittels einstellbar sind, wobei die eine Schaltstellung des Schaltventils (1) durch Beaufschlagung einer Kolbenfläche des Schaltventilkolbens (38) mit unter Schaltdruck stehendem, von einer Servopumpe (8) geförderten Druckmittel einstellbar ist und
   - mit einem zwei Schaltstellungen aufweisenden Steuerventil (2), dessen eine Schaltstellung durch die Kraft einer Druckfeder (35) und dessen andere Schaltstellung durch den auf eine Kolbenfläche (36) des Steuerventilkolbens (31) wirkenden, einen vorbestimmten Wert übersteigenden Druck einer motordrehzahlabhängig arbeitenden Niederdruckpumpe (20) einstellbar sind,

   dadurch **gekennzeichnet,**
   - daß das Steuerventil (2) ausschließlich mit dem von der Niederdruckpumpe (20) geförderten Druckmittel in Berührung steht,
   - daß der Schaltventilkolben (38) des Schaltventils (1) als Stufenkolben ausgebildet ist, dessen große Stirnfläche (40) und dessen Ringfläche (41) zwei Kolbenflächen bilden, die mit von der Niederdruckpumpe (20) gefördertem Druckmittel beaufschlagbar sind und dessen kleine Stirnfläche (42) die Kolbenfläche bildet, die mit unter Schaltdruck stehendem Druckmittel beaufschlagbar ist,
   - daß das Steuerventil (2) zwei Steuerkantenpaare (33, 34) aufweist für die wechselseitige Beaufschlagung der großen Stirnfläche (40) und der Ringfläche (41) des Schaltventilkolbens (38),
   - daß das Schaltventil (1) zwei Arbeitsleitungsanschlüsse (3, 4) für zwei zu dem Gangschaltventil (7) führende Arbeitsleitungen (5, 6) besitzt, die wechselweise mit Schaltdruck beaufschlagt bzw. mit dem Rücklauf zu einem Druckmittelbehälter (10) verbunden sind,
   - daß bei beiden geschalteten Gängen der erste Arbeitsleitungsanschluß (3) mit dem Betätigungsanschluß (11) für die Betätigungseinrichtung (15) des langsamen Ganges und der zweite Arbeitsleitungsanschluß (4) mit dem Betätigungsanschluß (12) für die Betätigungseinrichtung (16) des schnellen Ganges über das Schaltventil (1) verbunden sind, und
   - daß bei eingeschaltetem schnellen Gang und hoher Motordrehzahl, bei der der vorbestimmte Wert des Druckes der Niederdruckpumpe (20) überschritten ist, eine Beaufschlagung der Betätigungseinrichtung (15) des langsamen Ganges mit Schaltdruck dadurch verhindert wird, daß der dem langsamen Gang zugeordnete erste Arbeitsleitungsanschluß (3) über das Schaltventil (1) mit dem Betätigungsanschluß (12) für die Betätigungseinrichtung (16) des schnellen Ganges verbunden wird.

2. Motordrehzahlabhängige Sperre nach Anspruch 1, dadurch **gekennzeichnet,** daß in dem Schaltventil (1) ein Steuerkantenpaar (44) angeordnet ist, durch das die Verbindung von dem ersten Arbeitsleitungsanschluß (3) zu dem Betätigungsanschluß (11) für die Betätigungseinrichtung (15) des langsamen Ganges auf- und zusteuerbar ist.

3. Motordrehzahlabhängige Sperre nach Anspruch 2, dadurch **gekennzeichnet,** daß in dem Schaltventil (1) zwei Wechselventile (45, 48) angeordnet sind,
   - deren erstes (45) durch die Kraft einer Druckfeder (46) in eine Stellung gedrückt wird, in der eine Verbindung von dem zweiten Arbeitsleitungsanschluß (4) zu dem Betätigungsanschluß (12) für die Betätigungseinrichtung (16) des schnellen Ganges geöffnet ist, und
   - deren zweites (48) durch die Kraft eines an dem Betätigungsanschluß (11) für die Betätigungseinrichtung (15) des langsamen Ganges herrschenden Druckes in eine Stellung verstellbar ist, in der eine Verbindung von dem ersten Arbeitsleitungsanschluß (3) zu dem Betätigungsanschluß (12) für die Betätigungseinrichtung (16) des schnellen Ganges abgesperrt ist, und
   - daß bei eingeschaltetem schnellen Gang und hoher Motordrehzahl, bei der der vorbestimmte Wert des Druckes der Niederdruckpumpe (20) überschritten ist, und bei vorgewähltem langsamen Gang das erste und das zweite Wechselventil (45, 48) durch am ersten Arbeitsleitungsanschluß (3) anstehenden Schaltdruck in Schaltstellungen verstellt sind, in denen eine Verbindung von dem ersten Arbeitsleitungsanschluß (3) zu dem Betätigungsanschluß (12) für die Betätigungseinrichtung (16) des schnellen Ganges geöffnet ist und eine Verbindung von dem ersten Arbeitsleitungsanschluß (3) zu dem Betätigungsanschluß (11) für die Betätigungseinrichtung (15) des langsamen Ganges abgesperrt ist.

4. Motordrehzahlabhängige Sperre nach Anspruch 1, dadurch **gekennzeichnet,** daß in dem Schaltventil (1) eine Hochdruckdichtung (53) angeordnet ist, die den mit Niederdruck beaufschlagbaren Teil des Schaltventils (1), der die große Stirnfläche (40) und die Ringfläche (41) des Schaltventilkolbens (38) enthält, von dem mit Schaltdruck beaufschlagbaren Teil des Schaltventils (1) trennt.

5. Motordrehzahlabhängige Sperre nach Anspruch 3, dadurch **gekennzeichnet,** daß in dem Schaltventil (1) ein drittes Wechselventil (52) angeordnet ist, das eine Verbindung von dem zweiten Arbeitsleitungsanschluß (4) und dem Betätigungsanschluß (11) für die Betätigungseinrichtung (15) des langsamen Ganges immer dann absperrt, wenn in einem dieser Anschlüsse der Schaltdruck ansteht.

6. Motordrehzahlabhängige Sperre nach Anspruch 1, dadurch **gekennzeichnet,** daß das Steuerventil (2) ein drittes Steuerkantenpaar (37) aufweist, durch das in Verbindung mit der Druckfeder (35) und der Kolbenfläche (36) des Steuerventilkolbens (31) ein Druckbegrenzungsventil (27) gebildet wird.


**Claims**

1. Engine-speed-dependent blocking device to prevent impermissible down-shifts in motor-vehicle gear change boxes having at least two selectable gears and a gear-shift valve (7) capable of being adjustable by the driver,
    - with a pilot valve (1) having two selection positions, by means of which pilot valve it is possible, via actuating connections (11, 12) of actuating devices (15, 16) for a low gear and a high gear respectively, to supply pressure medium subject to selection pressure, the two selection positions of said pilot valve being adjustable by the pressure exerted by a pressure medium, whereby one selection position of the pilot valve (1) can be adjusted by means of pressure on a piston surface of the pilot-valve piston (38) exerted by pressure medium which is subject to selection pressure and which is conveyed by a servo pump (8), and with a control valve (2) having two selection positions, whereby one selection position of said control valve can be adjusted by the force of a compression spring (35), and the other selection position can be adjusted by the pressure of a low-pressure pump which operates in accordance with engine speed, said pressure acting on a piston surface (36) of the control-valve piston (31) and exceeding a predetermined value,

    **characterised** in that
    - the control valve (2) is exclusively in contact with the pressure medium conveyed by the low-pressure pump (20),
    - the pilot-valve piston (38) of the pilot valve (1) is designed as a stepped piston, the large end surface (40) of which and the annular surface (41) of which form two piston surfaces which are capable of being put under pressure by pressure medium conveyed by the low-pressure pump (20) and the small end surface (42) of which forms the piston surface which is capable of being put under pressure by pressure medium subject to selection pressure,
    - the control valve (2) has two pairs of control edges (33, 34) for alternate application of pressure to the large end surface (40) and the annular surface (41) of the pilot-valve piston (38),
    - the pilot valve (1) possesses two working-line connections (3, 4) for two working lines (5, 6) leading to the gear-shift valve (7), said working lines being alternately subject to selection pressure or linked with the return flow to a pressure-medium reservoir (10),
    - for both engaged gears the first working-line connection (3) is connected to the actuating connection (11) for the actuating device (15) of the low gear and the second working-line connection (4) is connected to the actuating connection (12) for the actuating device (16) of the high gear via the pilot valve (1), and
    - with a high gear engaged and with high engine speed at which the predetermined value of the pressure of the low-pressure pump (20) is exceeded, application of selection pressure to the actuating device (15) of the low gear is prevented by the first working-line connection (3) associated with the low gear being connected via the pilot valve (1) to the actuating connection (12) for the actuating device (16) of the high gear.

2. Engine-speed-dependent blocking device according to claim 1, **characterised** in that a pair of control edges (44) is arranged in the pilot valve (1), by means of which pair of control edges the linkage from the first working-line connection (3) to the actuating connection (11) for the actuating device (15) of the low gear is capable of being controlled so as to be open or closed.

3. Engine-speed-dependent blocking device according to claim 2, **characterised** in that two shuttle valves (45, 48) are arranged in the pilot valve (1),
   - the first (45) of said shuttle valves being pressed by the force of a compression spring (46) into a position in which a linkage from the second working-line connection (4) is opened to the actuating connection (12) for the actuating device (16) of the high gear, and
   - the second (48) of said shuttle valves being adjustable by the force of a pressure acting on the actuating connection (11) for the actuating device (15) of the low gear into a position in which a linkage from the first working-line connection (3) to the actuating connection (12) for the actuating device (16) of the high gear is blocked, and
   - with a high gear engaged and with high engine speed at which the predeterminded value of the pressure of the low-pressure pump (20) is exceeded and with a preselected low gear the first and the second shuttle valves (45, 48) are adjustable by selection pressure acting on the first working-line connection (3) into selection positions in which a linkage from the first working-line connection (3) to the actuating connection (12) for the actuating device (16) of the high gear is opened and a linkage from the first working-line connection (3) to the actuating connection (11) for the actuating device (15) of the low gear blocked.

4. Engine-speed-dependent blocking device according to claim 1, **characterised** in that a high-pressure seal (53) is arranged in the pilot valve (1), said seal separating the part of the pilot valve (1) that is capable of being subjected to low pressure and that contains the large end surface (40) and the annular surface (41) of the pilot-valve piston (38) from the part of the pilot valve (1) that is capable of being subjected to selection pressure.

5. Engine-speed-dependent blocking device according to claim 3, **characterised** in that a third shuttle valve (52) is arranged in the pilot valve (1), said shuttle valve always blocking a linkage between the second working-line connection (4) and the actuating connection (11) for the actuating device (15) of the low gear whenever the selection pressure is applied in one of these connections.

6. Engine-speed-dependent blocking device according to claim 1, **characterised** in that the control valve (2) has a third pair of control edges (37), by means of which, in conjunction with the compression spring (35) and the piston surface (36) of the control-valve piston (31), a pressure-limiting valve (27) is formed.

**Revendications**

1. Dispositif de blocage en fonction de la vitesse du moteur pour empêcher des rétrogradations inacceptables dans des boîtes de vitesses de véhicules automobiles comportant au moins deux rapports commutables et une soupape de changement de rapports (7) commandée par le conducteur,
   - comportant une soupape de commutation (1) à deux positions de commutation, par laquelle un fluide soumis à une pression de commutation peut être transmis à travers des raccords respectifs (11, 12) à des organes d'actionnement respectifs (15, 16) pour un rapport lent et un rapport rapide, et dont les deux positions de commutation sont déterminées par la pression d'un fluide, la première position de commutation de la soupape de commutation (1) étant déterminée par sollicitation d'une surface du piston (38) de la soupape de commutation au moyen d'un fluide délivré par une servopompe (8) et se trouvant à la pression de commutation, et
   - comportant une soupape de commande (2) à deux positions, dont une première position est définie par la force d'un ressort de compression (35) et dont l'autre position est définie par la pression, supérieure à une valeur prédéterminée, d'une pompe à basse pression (20) travaillant en fonction de la vitesse du moteur, cette pression agissant sur une surface (36) du piston (31) de la soupape de commande,

   **caractérisé :**
   - en ce que la soupape de commande (2) est en contact exclusivement avec le fluide délivré par la pompe à basse pression (20),
   - en ce que le piston (38) de la soupape de commutation (1) est formé par un piston différentiel dont une grande surface frontale (40) et une surface annulaire (41) forment deux surfaces de piston sus-

EP 0 466 750 B1

ceptibles d'être sollicitées par du fluide délivré par la pompe à basse pression (20) et dont une petite surface frontale (42) forme la surface de piston susceptible d' être sollicitée par le fluide se trouvant à la pression de commutation,

- en ce que la soupape de commande (2) comporte deux paires d'arêtes de commande (33, 34) pour solliciter de manière alternée la grande surface frontale (40) et la surface annulaire (41) du piston (38) de la soupape de commutation,
- en ce que la soupape de commutation (1) possède deux raccords de travail (3, 4) pour deux conduits de travail (5, 6) allant à la soupape de changement de rapports (7), lesquels sont alternativement soumis à la pression de commutation et raccordés au retour à un réservoir de fluide (10),
- en ce que lorsque l'un ou l'autre des deux rapports est enclenché, la soupape de commutation (1) raccorde le premier raccord de travail (3) au raccord (11) prévu pour l'organe d'actionnement (15) du rapport lent et raccorde le second raccord de travail (4) au raccord (12) prévu pour l'organe d'actionnement (16) du rapport rapide, et
- en ce que lorsque le rapport rapide est enclenché et que le moteur a une vitesse élevée, à laquelle ladite valeur prédéterminée de la pression de la pompe à basse pression (20) est dépassée, une sollicitation de l'organe d'actionnement (15) du rapport lent par la pression de commutation est empêchée par le fait que le premier raccord de travail (3), correspondant au rapport lent, est raccordé par la soupape de commutation (1) au raccord (12) prévu pour l'organe d'actionnement (16) du rapport rapide.

2. Dispositif de blocage selon la revendication 1, **caractérisé** en ce que la soupape de commutation (1) comporte une paire d'arêtes de commande (44) permettant d' établir et de bloquer la liaison du premier raccord de travail (3) au raccord (11) prévu pour l'organe d'actionnement (15) du rapport lent.

3. Dispositif de blocage selon la revendication 2, **caractérisé** en ce que la soupape de commutation (1) comporte deux soupapes à deux voies (45, 48),
- dont la première (45) est sollicitée par la force d'un ressort de compression (46) vers une position dans laquelle une liaison est ouverte entre le second raccord de travail (4) et le raccord (12) prévu pour l'organe d'actionnement (16) du rapport rapide, et
- dont la seconde (48) est agencée pour être mise, par la force d'une pression s'exerçant dans le raccord (11) prévu pour l'organe d'actionnement (15) du rapport lent, dans une position où une liaison est bloquée entre le premier raccord de travail (3) et le raccord (12) prévu pour l'organe d'actionnement (16) du rapport rapide, et
- en ce que lorsque le rapport rapide est enclenché et que le moteur a une vitesse élevée, à laquelle ladite valeur prédéterminée de la pression de la pompe à basse pression (20) est dépassée, et que le rapport lent est présélectionné, la première et la seconde soupape à deux voies (45, 48) sont mises, par la pression de commutation s'exerçant au premier raccord de travail (3), dans des positions où une liaison est ouverte entre le premier raccord de travail (3) et le raccord (12) prévu pour l'organe d'actionnement (16) du rapport rapide et où une liaison est bloquée entre le premier raccord de travail (3) et le raccord (11) prévu pour l'organe d'actionnement (15) du rapport lent.

4. Dispositif de blocage selon la revendication 1, **caractérisé** en ce que la soupape de commutation (1) comporte un joint d'étanchéité à haute pression (53), lequel sépare la partie à basse pression de la soupape de commutation (1), comportant la grande surface frontale (40) et la surface annulaire (41) du piston (38), de la partie de la soupape de commutation (1) qui est soumise à la pression de commutation.

5. Dispositif de blocage selon la revendication 3, **caractérisé** en ce que la soupape de commutation (1) comporte une troisième soupape à deux voies (52) qui bloque toujours une liaison entre le second raccord de travail (4) et le raccord (11) prévu pour l'organe d'actionnement (15) du rapport lent lorsque la pression de commutation s'exerce dans l'un de ces raccords.

6. Dispositif de blocage selon la revendication 1, **caractérisé** en ce que la soupape de commande (2) comporte une troisième paire d'arêtes de commande (37) qui forme une soupape de limitation de pression (27) en combinaison avec le ressort (35) et la surface de piston (36) du piston (31) de la soupape de commande.

9

FIG.1

FIG. 2

EP 0 466 750 B1

FIG. 3

EP 0 466 750 B1